# EUROPEAN PATENT SPECIFICATION

(11) **EP 4 118 407 B1**
(45) Date of publication and mention of the grant of the patent: **07.05.2025**
(21) Application number: 21715967.2
(22) Date of filing: 09.03.2021
(51) Int. Cl.: G01L 1/24, G01L 5/105, G01M 5/00, G01B 11/16, G01B 11/24, D07B 1/14, H01B 5/10, H01B 7/32

(54) **CONDUCTOR FOR BARE OVERHEAD POWER LINE WITH COMPOSITE MATERIAL CORE AND REAL-TIME MONITORING SYSTEM FOR MONITORING THE STRUCTURAL INTEGRITY OF THE CONDUCTOR DURING PRODUCTION, LAYING AND INSTALLATION**
LEITER FÜR OVERHEAD-STROMLEITUNG MIT VERBUNDMATERIALKERN UND REAL-TIME-ÜBERWACHUNGSSYSTEM ZUR ÜBERWACHUNG DER STRUKTURELLEN INTEGRITÄT DES LEITERS WÄHREND DER PRODUKTION, LAGE UND INSTALLATION
CONDUCTEUR POUR LIGNE D'ALIMENTATION AÉRIENNE NUE AVEC NOYAU EN MATÉRIAU COMPOSITE ET SYSTÈME DE SURVEILLANCE EN TEMPS RÉEL POUR SURVEILLER L'INTÉGRITÉ STRUCTURELLE DU CONDUCTEUR PENDANT LA PRODUCTION, LA POSE ET L'INSTALLATION

(30) Priority: 12.03.2020 IT 202000005347
(43) Date of publication of application: 18.01.2023
(73) Proprietor: De Angeli Prodotti Srl, 35023 Bagnoli di Sopra (PD) (IT)
(72) Inventor: SARTI, Giacomo, 47841 Cattolica (RN) (IT); PERONI, Davide, 35042 Este (PD) (IT); MIMO, Debora, 35028 Piove di Sacco (PD) (IT); MORO, Cristian, 35048 Stanghella (PD) (IT)
(74) Representative: Metroconsult Srl
(86) International application number: PCT/IB2021/051945
(87) International publication number: WO 2021/181265

(56) References cited:
- WO-A1-2010/136062
- CN-U- 201 569 523
- US-A1- 2012 174 683
- US-A1- 2018 136 016
- HAO ZHANG ET AL: "Performance Evaluation of BOTDR-based Distributed Fiber Optic Sensors for Crack Monitoring", SHM. STRUCTURAL HEALTH MONITORING, vol. 7, no. 2, 3 June 2008 (2008-06-03), GB, pages 143 - 156, XP055749712, ISSN: 1475-9217, DOI: 10.1177/1475921708089745
- ROBERTO BENATO ET AL: "CALAJOULE: An Italian Research to Lessen Joule Power Losses in Overhead Lines by Means of Innovative Conductors", ENERGIES, vol. 12, no. 16, 13 August 2019 (2019-08-13), pages 3107, XP055749951, DOI: 10.3390/en12163107
- ETIENNE ROCHAT ET AL: "Enhanced Brillouin Distributed Strain and Temperature Sensing for Structural Health Monitoring in Industrial Applications", 31 July 2014 (2014-07-31), XP055749588, Retrieved from the Internet <URL:https://www.researchgate.net/profile/Marc_Nikles/publication/281947235_Enhanced_Brillouin_Distributed_Strain_and_Temperature_Sensing_for_Structural_Health_Monitoring_in_Industrial_Applications/links/58008bf208ae6fc7fc664595/Enhanced-Brillouin-Distributed-Strain-and-Temperature-Sensing-for-Structural> [retrieved on 20201111]
- QING BAI ET AL: "Recent Advances in Brillouin Optical Time Domain Reflectometry", SENSORS, vol. 19, no. 8, 18 April 2019 (2019-04-18), pages 1862, XP055749720, DOI: 10.3390/s19081862

## Description

### Field of the invention

The present invention relates to a conductor for power lines, in particular a conductor for bare overhead power lines, with a core made of composite material and a continuous, real-time monitoring system for ensuring the absence of core damage from production to in-line installation of the conductor.

### Background art

Overhead power lines are generally made out of aluminium conductors due to their good conductivity, low cost and low weight, in comparison with other possible conductors for power applications, such as copper, gold and silver. However, because of the poor mechanical properties of aluminium, such conductors are generally reinforced internally with steel wires, which permit the installation of such conductors. Recent requirements have led to continuous efforts aimed at carrying increased power along existing lines, e.g. by replacing old conductors with latest-generation ones. It has therefore been necessary to lighten the system while maintaining sufficient mechanical properties.

The selection of the type of power line conductor to be used is determined by the final conditions of the conductor itself, in particular service life, mechanical stresses and environmental conditions. In fact, as broadly documented in the literature, the main environmental hazards for overhead conductors are prolonged exposure to temperature, humidity, UV-visible radiations and aggressive chemical agents combined with continuous application of mechanical stresses.

According to international regulations, such as, for example, the CEI 11-4 (1998-09) standard, "Erection of overhead power lines outside" for Italy, external power lines are defined as "lines installed outdoors, above the ground and consisting of bare conductors with respective insulators, supports and accessories". This standard also envisages that the allowable stresses undergone by the conductors in EDS (Every Day Stress) conditions should not exceed 25% of its tensile strength for a settled conductor and 30% for an unsettled conductor (i.e. during the stretching phase). Such conditions should be met throughout the service life of the conductor, which is estimated to exceed 40-50 years before the conductor needs replacing. The conductor should maintain its mechanical and fatigue strength characteristics over time, with a low creep rate.

Among electric conductors for overhead power transmission, the most widespread ones are those with aluminium conductive elements. Conductors for overhead transmission are generally classified into homogeneous and non-homogeneous conductors. The former (AAAC) contain aluminium alloys only, which are used both for conducting electric current and as support material, while the latter contain a core made of reinforcing material, suitable for bearing part of the weight of the conductor. Depending on the material employed as a reinforcement, four categories can be defined, i.e. containing a steel core (identified as ASCR, ACSS and GAP TYPE), containing a special metal alloy for reinforcing the conductor (Fe-Ni INVAR alloy), containing a metallic composite material (Al-Zr alloy with long aluminium fibers, ACCR), and containing a polymeric-matrix composite material with a pultruded strength member in the form of a single wire or a plurality of stranded wires (ACCM). A conductor of this type is described in Italian patent no. 1374151 granted to the present Applicant.

Although conductors are currently widespread on the market which are provided with a strength member made of composite material, the phenomenon of structural failures of the single-wire carbon core is a catastrophic scenario which has already been observed both in Europe and elsewhere, and which needs to be faced by power network operators. Structural failures are caused by cracks arising from the inherent weakness of carbon to compression and bending, which may form within the carbon core during the production of the conductor or during the installation of the conductor due to improper handling.

A solution available on the market consists of a conductor with a multistrand strength member made of composite material. This solution envisages the use of redundant pultruded carbon strength members which, stranded together, ensure a higher level of safety against structural failures compared with solutions provided with a core having just one strength member. Nevertheless, this solution is more expensive because of the construction complexity of the multistrand carbon core.

While for a multistrand-core conductor the risk of structural failure is mitigated by the redundancy of the core elements, in conductors having a single-wire core a single crack will immediately endanger the integrity of the whole structural member of the conductor, causing it to mechanically collapse either immediately or progressively over time.

One alternative that ensures an adequate level of core integrity, while still having a competitive commercial cost, is the application of a monitoring system within the single-wire composite core that provides structural integrity.

In this regard, document WO 2019/168998 A1 describes a monitoring system relying on optical fibers embedded into the pultruded carbon and glass fiber used as a single-wire structural reinforcement for overhead power conductors. When coupled to devices for sending and receiving optical signals, this system has some inherent limitations that are overcome by the present patent. The system described in document WO 2019/168998 A1 refers to fibers embedded within the pultruded composite material [par. 0089], so that they cannot be extracted during the monitoring activity and may suffer damage during production when the item is placed at high temperature into the mould that will give the pultruded material its final shape. Optical fibers, which are very thin and fragile, are subject to breaking as they are unwound from the coil and fed to the pultrusion mould. In-line junctions would be possible, but they are hardly practicable and not compatible with the pultrusion process, which cannot be stopped if material waste is to be avoided. A further inherent limitation of this invention is related to the necessity of having constant access to both ends of the fibers for sending and receiving the optical signal [par. 00112]. This condition is only fulfilled during production checks and laying, but not when installing the conductor on pylons, which is still one of the stages in which the conductor is most subject to permanent damage because of the working context in which it takes place. Installation usually occurs at the top of pylons, with the operators and equipment suspended in the air within a delicate working context, which is affected by weather conditions and subject to space constraints determined by the safety devices for operators and equipment. In this situation, the conductor undergoes mechanical stresses, bending and vibrations that may jeopardize its structural integrity. In addition, in this situation the end of the conductor is not available for connection to an optical instrument, because it must be suitably cut and manipulated for mounting it to the tension clamp and fastening the conductor to the pylon. It would be useful to have available a monitoring system that allows interrogating the conductor core also during the delicate phases of installation of the tension clamp and fastening to the pylon. A further limitation of this system relates to the necessity of using an LED system for interrogating the optical fibers. As stated in par. [00114], a LED system is preferred over a more common laser system because of the dimensions of the optical fibers. As previously discussed, according to WO 2019/168998 A1 the optical fibers are embedded within the pultruded material, and such condition makes it impossible to extract and read them by using the common laser interrogation tool called OTDR (Optical Time Domain Reflectometer). Due to this limitation, the fibers can only be read by using optical systems, e.g. LED systems, resulting in further limitations concerning the impossibility of obtaining information such as, for example, the degree of attenuation of the signal at different wavelengths and the distance between the fiber interruption point and the reading point.

Paragraphs [0084-0086] of WO 2019/168998 A1 refer to the necessity of using a number of optical fibers greater than one in order to make it statistically probable that a crack in the carbon core will propagate to and break at least one optical fiber, thus allowing the monitoring system to detect the damage. This system has intrinsic limitations related to the maximum number of fibers that can be inserted into the pultruded material, which, the cross-section of the element being equal, will take up space to the detriment of the carbon fibers that will have to mechanically bear the conductor. Moreover, optical fiber continuity is a necessary, but insufficient, condition to be sure of the absence of cracks, which statistically may be still present between one optical fiber and the next without however being detected by the monitoring system. A further limitation of this system is stated in paragraph [0087] and relates to the impossibility of positioning the optical fibers on the outer surface of the pultruded element, which would allow for optimal detection of any cracks propagating inwards from the surface of the pultruded element; the inherent limitation is related to the potential damage that may be suffered by contact with the conductor wires carrying electric current. Other prior art documents relevant to the invention are the following documents:
- Roberto Benato et al.: "CALAJOULE: An Italian Research to Lessen Joule Power Losses in Overhead Lines by Means of Innovative Conductors", Energies, vol. 12, no. 16, 13 August 2019, 3107, pages 1-21, DOI: 10.3390/en12163107
- WO 2010/136062 A1
- US 2012/174683 A1
- Etienne Rochat et al.: "Enhanced Brillouin Distributed Strain and Temperature Sensing for Structural Health Monitoring in Industrial Applications", 31 July 2014
- Qing Bai et al.: "Recent Advances in Brillouin Optical Time Domain Reflectometry", Sensors, vol. 19, no. 8, 18 April 2019, page 1862, DOI: 10.3390/s19081862.

The first document refers to a conductor as according to the invention, whereas the other documents refer to known fiber optic-based conductor health monitoring systems.

### Summary of the invention

Therefore, the present invention aims to provide a conductor for power lines which integrates a system for real-time monitoring of the condition of the load-bearing element made of composite material which overcomes the above-mentioned problems.

It is one object of the present invention to provide a non-invasive monitoring system to be continuously inserted within a conductor for overhead power lines, for the purpose of evaluating the structural integrity of the composite core during the production of the conductor and during the installation of the same on pylons.

Further objects of the invention include providing a conductor for overhead power lines with a monitoring system having the following features:
- it is applied within the conductor, throughout its length, in a continuous and non-invasive manner;
- protection with one or more conductive sheaths to avoid damage to the optical fibers during the production stages and to prevent contact with the wires made of conductive material;
- accurate identification of the position of any defects within the composite core;
- ability to send alarm signals prior to reaching the limit bending angle, for warning about improper handling before structural damage occurs;
- it makes sure that there are no cracks within the pultruded composite load-bearing element, also referred to as core, without having any invasive impact therein;
- ability to save the processed data for further analysis and verification of compliance with the practices described in the conductor installation manual.

The basic idea of the present invention is to provide the power line conductor with a monitoring system including at least two optical fibers suitably integrated within, and throughout the length of, the conductor. The fibers, interrogated by means of a commercial instrument called BOTDR (Brillouin Optical Time Domain Reflectometer), provide information, over the whole length of the conductor, about the integrity of the pultruded composite load-bearing element, also referred to as conductor core, and about the position of any defects that may be detected during both the production and the installation of the conductor.

In light of the above, the invention relates to a conductor with a monitoring system as claimed in claims 1-12.

Preferably, said conductor with a monitoring system comprises a load-bearing core made of composite material.

Preferably, said conductor with a monitoring system comprises one or more electrically conductive layers, externally associated with said load-bearing core.

Preferably, said conductor with a monitoring system comprises two or more optical fibers, arranged longitudinally along said load-bearing core, on a radially external surface of the same.

Preferably, said conductor with a monitoring system comprises a BOTDR system, associated with said optical fibers.

Preferably, said BOTDR system is configured for reading a bending radius of said load-bearing core.

Preferably, said BOTDR system is configured for determining the presence of cracks on said load-bearing core.

Preferably, said BOTDR system is configured for determining the position of said cracks.

Preferably, said BOTDR system is configured for determining a maximum allowable bending radius.

Preferably, said BOTDR system is configured for determining the position of said maximum allowable bending radius.

Preferably, said conductor with a monitoring system comprises a processing unit configured for generating, as a function of said reading, a notification signal in the event that critical parameters are reached.

The invention may comprise one or more of the following preferred features.

Preferably, said load-bearing core is made of pultruded material.

Preferably, said load-bearing core is made as a single element.

Preferably, said load-bearing core is made as a plurality of elements stranded together.

Preferably, if said load-bearing core is made as a single element, said optical fibers are arranged on the radially external surface of said single element.

Preferably, if said load-bearing core is made as a plurality of elements stranded together, said optical fibers are arranged on the radially external surface of a central element of said elements stranded together.

Preferably, said BOTDR system is configured for performing a check over the entire length of the load-bearing core during the production of the conductor.

Preferably, said BOTDR system is configured for performing a check over the entire length of the load-bearing core during the conductor production phases.

Preferably, said BOTDR system is configured for performing a check over the entire length of the load-bearing core during the installation of the conductor.

Preferably, said processing unit is equipped with an artificial intelligence agent, configured for executing self-learning algorithms for discerning different types of defects of said load-bearing core.

Preferably, said optical fibers are of the G652 or G651 or G655 type.

Preferably, said optical fibers are arranged along the entire length of said load-bearing core.

According to the invention, in one alternative, said optical fibers are arranged mutually offset by approximately 120°.

Preferably, said optical fibers are three in number.

Preferably, said BOTDR system is configured for sending one or more test signals in said optical fibers and for receiving corresponding backscattered signals.

Preferably, by processing said backscattered signals, the effect of temperature is substantially cancelled and information is obtained which is directly correlated with the deformation undergone by said optical fibers.

Preferably, said optical fibers are held in position by spacers.

Preferably, said spacers are made of polymeric material, in particular polyaramide or polyamide material or Peek or polyesters or polyimides.

Preferably, said optical fibers are protected by one or more tapes or sheaths.

Preferably, said tapes or sheaths are made of polymeric material and/or aluminium or alloys thereof.

Preferably, communication between said BOTDR system and the processing unit occurs by wireless, preferably Wi-Fi, technology.

Preferably, said wireless technology is employed for continuous use during the conductor manufacturing, laying and installation phases.

Preferably, said processing unit is configured for saving data in operation for further analysis, in particular for verifying the compliance with the correct practices described in the conductor installation manual.

Preferably, said BOTDR system is configured for operating at one end only of said load-bearing core, leaving the opposite end clear for handling.

Preferably, any structural defects of said load-bearing core and/or handling anomalies are detected by said BOTDR system and recorded by said processing unit even if said optical fibers are not broken.

Preferably, said processing unit is configured for generating an alarm signal when the conductor is handled incorrectly, before said load-bearing core breaks.

### Brief description of the drawings

Further features and advantages of the invention will become more apparent in the light of the description of a preferred, but non-limiting, embodiment of the monitoring system according to the invention, which is illustrated by way of non-limiting examples in the annexed drawings.

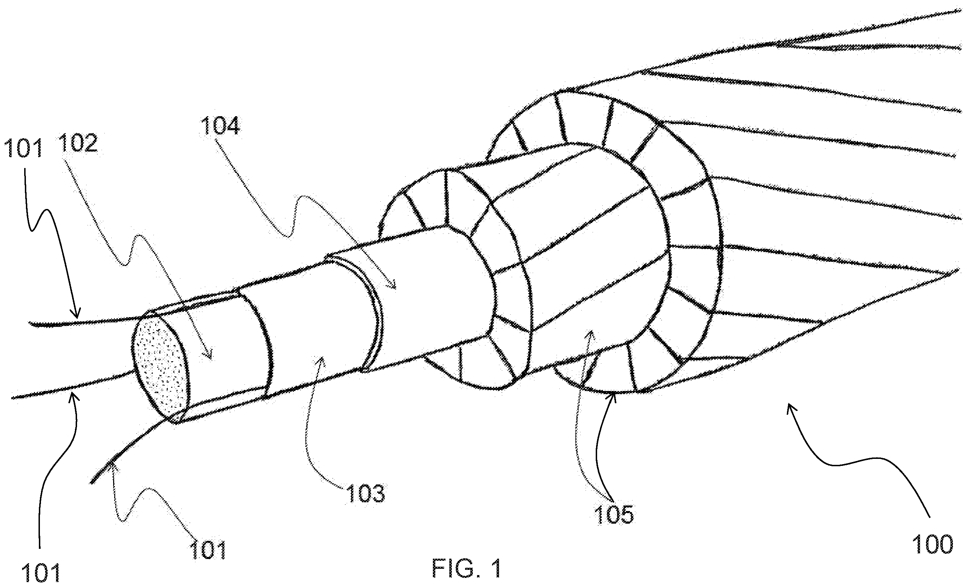

**FIG. 1** shows, by way of non-limiting example, the most preferred construction of the present invention, which consists of three optical fibers **101** arranged around a single-wire core made of composite material **102.** The fibers are held in position by a tape **103** and the whole assembly is coated with an extruded aluminium tube **104.** The conductor is finished with one or more claddings of aluminium or aluminium-alloy wires **105** having a circular or otherwise shaped cross-section.

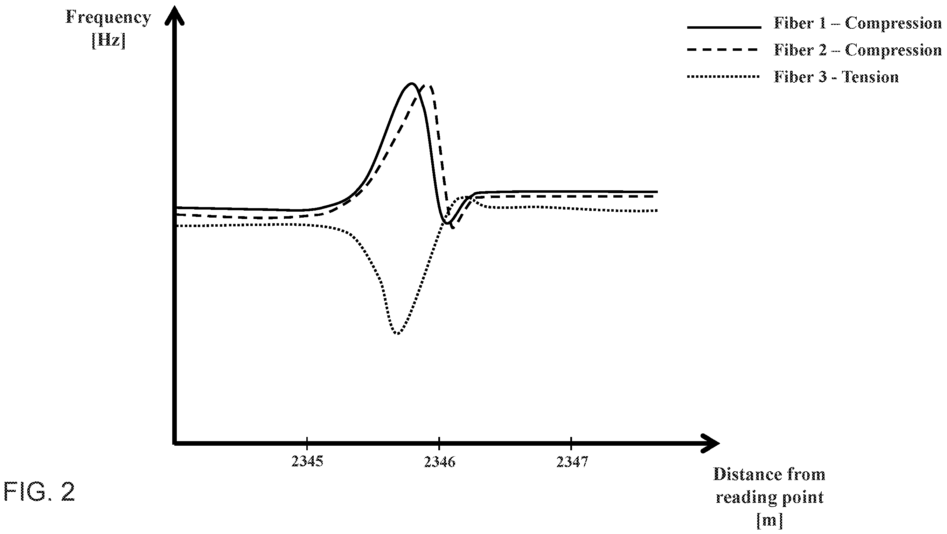

**FIG. 2** shows an example of a BOTDR reading representing the trend of frequency as a function of space for three optical fibers undergoing deformation.

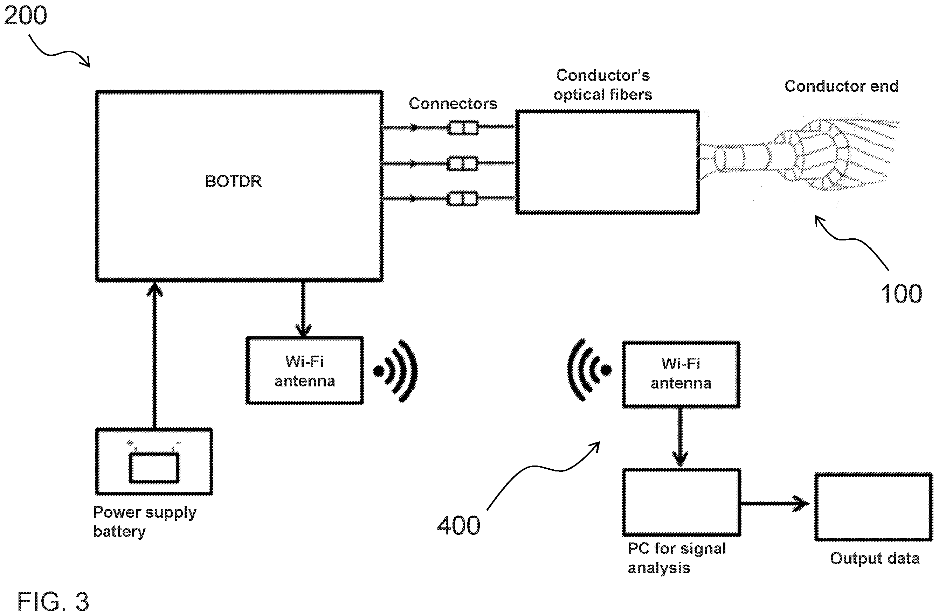

**FIG. 3** shows a block diagram of the operation of the system as a whole. The BOTDR system is powered by a battery and is connected to the three optical fibers at one end of the conductor. The data are sent as Wi-Fi signals to a computer, which processes them and outputs the operation result indicating either the absence or the presence of defects or sharp bends, including their extension and distance from the reading point.

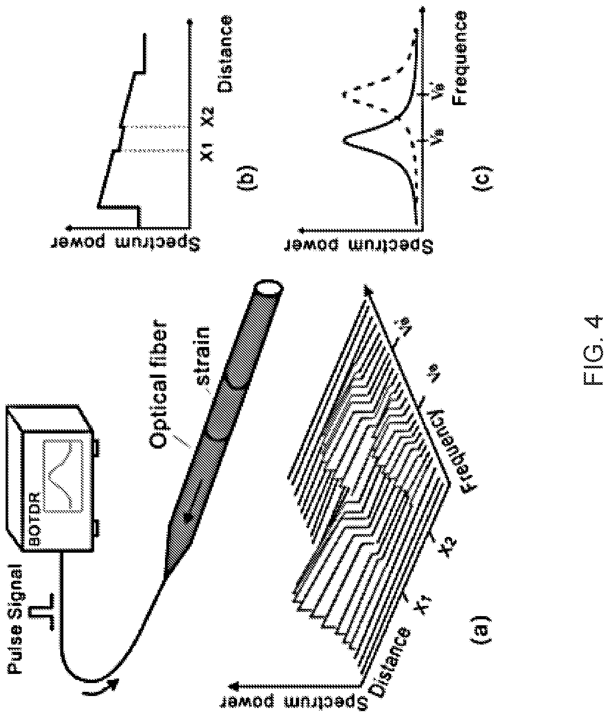

**FIG. 4** shows the operation of the monitoring system, according to which an optical fiber undergoing deformation sends to a BOTDR system a return signal variation that creates a frequency displacement as a function of the distance from the reading point and the strain intensity.

### Detailed description of some embodiments

The monitoring system of the invention is characterized in that it adopts a composite conductor core **(102)** with at least two optical fibers **(101),** e.g., without however being limited thereto, three G652D optical fibers, arranged along the pultruded composite load-bearing element, protected by one or more sheaths made of conductive and/or polymeric material, such as, without however being limited thereto, aramidic material and aluminium **(103 - 104),** and interrogated by means of a commercial laser system to provide information about the integrity of the core and the compliance with the maximum bending radius throughout the length of the core, both during the production stages and during the installation of the conductor. The present invention refers to a pultruded composite load-bearing core consisting of a single wire or multiple elements stranded together. If the conductor of the present invention has a core formed by only one pultruded composite load-bearing element, then the optical fibers must be arranged on the surface of the pultruded element at a suitable mutual distance by means of special spacers or laid on the surface into suitable cavities formed on its outer profile. If the conductor of the present invention is in its second version, i.e. with a core formed by multiple pultruded composite elements stranded together, then the optical fibers must be arranged on the surface of the central element at a suitable mutual distance by means of spacers, or laid on such surface into suitable slots formed on its outer profile.

Optical fibers, which have already been widely used for telecommunications and diagnostic applications, are characterized by the fact that they can internally conduct light while having very small dimensions and a low weight, thus being non-invasive in the conductor construction and immune to electrical noise. Their construction makes them particularly fragile to traverse compression and sensitive to mechanical stresses; therefore, their use is subject to the application of a mechanical protector (generally made of, without being limited thereto, polymeric and/or metallic material). Consisting of glassy or polymeric filaments, optical fibers are generally composed of a core and a cladding having respective diameters of 125 and 250 micrometres (approximately the size of a hair) and represent the current state of the art of transmission of optical signals over long distances. The optical fiber operates as a tubular mirror, where light entering the core at a certain angle propagates by means of a series of reflections to the separation surface between the two materials of the core and the cladding. Ideally, optical fibers are a perfect transmission medium. As a matter of fact, in addition to being wholly unaffected by electromagnetic noise, when adequately structured to ensure total reflection of the input signal they can, theoretically, fully output the input power with no losses. In practice, however, physical phenomena intervene which bring about some power attenuation along the fiber; such losses, which are typically evaluated in terms of specific attenuation, i.e. as dB/km, are due to:
- inherent properties of the medium;
- medium damage;
- thermal-mechanical stresses undergone by the medium.

If the fiber is damaged or stressed, or the core is strained beyond a predetermined radius, referred to as critical radius, the light will undergo a propagation variation that, depending on its intensity, will determine the extent of the strain. The optical fiber laid on and integral with the composite core is thus used as a monitoring system, directly providing information about the structural integrity of the conductor core and the actual compliance with the minimum bending radius prescribed as a function of the size of the conductor core, as specified in the installation instructions.

The physical principle at the basis of the present invention is the Brillouin effect (also referred to as Brillouin light scattering), according to which a strain undergone by the optical fiber results in a variation of the refraction index of the material it is made of, thus supplying a piece of information to the reading system **(****FIG. 4****).**

The strain measurement is based on the curvature theory for a bar subject to bending. When a bar is bent, there is an area subject to tension and an area subject to compression. The line that divides such two areas is called neutral axis and undergoes no strain during the bending. According to this principle, by positioning one optical fiber above the neutral axis and another one below it, and by analyzing the signal spectrum, it is possible to know which one is undergoing tension and which one is undergoing compression. With the two fibers arranged at 180° relative to each other, the neutral plane passes through their centers and no information is obtained as to the difference between their respective strains. Instead, according to the invention, with the two fibers arranged at 90° or 120°, in any strain condition there will still be at least one fiber under tension or under compression, thus supplying to the software the minimum amount of information necessary for the monitoring activity. The most preferred condition for the present patent is three fibers mutually arranged at 120° on the outer part of the pultruded composite load-bearing element. In such embodiment, there will be at least one fiber under compression and at least one fiber under tension for any deformation of the core, with a data redundancy that will ensure a correct and easy interpolation of the values by the software system.

During the conductor production and installation stages, precautionary measures need to be taken for handling it. It is important that the conductor is not bent beyond a critical radius, which is predetermined as a function of the diameter of the conductor and the characteristics of the composite core. For this reason, the conductor is provided with at least two optical fibers, e.g., without being limited thereto, three optical fibers, and is interrogated from one end while the other is left clear for handling. Every optical fiber will be subject to compression or tension or will remain neutral, and therefore sufficient information will be supplied for measuring the bending radius. Among the most widespread methods using a single end of the optical fiber, a particularly useful method is based on the spontaneous Brillouin technique. In this technique, the optical light is sent to the fiber and travels therein. A certain amount of luminous energy will be backscattered up to the launch end with the same wavelength, undergoing a so-called Rayleigh elastic scattering process. Part of the launched energy will be backscattered with a different wavelength, slightly offset because of the spontaneous Brillouin inelastic scattering (**FIG. 4**). The latter depends on both the temperature and the optical deformation undergone by the optical fiber. The extent of such phenomena depends on the intensity of the light sent into the optical fiber. By capturing and analyzing the backscattered spontaneous Brillouin energy, local strain and temperature can be determined. For metallic conductors with rather small cross-sections, such as those for overhead power lines, temperature can be considered to remain constant throughout the circumference of the conductor. Therefore, the only actual difference between the backscattered signals of all three optical fibers indicates strain, and the impact of temperature on the measurement is automatically excluded by the multi-fiber configuration and by the metallic nature of the conductor. In this way, no additional means are necessary for measuring the temperature, like those using additional optical fibers for temperature compensation. The approach that uses measurements with three optical fibers provides strain differences only, directly leading to calculating the bending radius of the conductor.

Therefore, the monitoring system of the present disclosure uses optical fibers as a sensor for determining the bending radius anywhere along the conductor. When the conductor is bent, e.g. when it is made to pass into the pulleys employed for laying the conductor, the BOTDR system **(200)** reads a variation in the strain of the optical fibers **(****FIG. 4****).** As shown in **FIG. 2****,** there will be an area of the core with optical fibers under compression and under tension (or vice versa). If the waveform shows a peak exceeding a predefined limit or the signal analysis gives excessive bending values, a visual and/or audible alarm signal may be generated for warning the operators about the fact that the limit bending angle has been exceeded. Such signal sent upon reaching the limit bending angle for warning about improper handling may be issued before structural damage occurs, thus preserving the integrity of the conductor and the safety of people and/or things. The alarm signal will also be accompanied by the distance value supplied by the BOTDR system **(200)** and will permit the exact identification of the damaged point of the core and the actual extent of the damage.

The monitoring system of the present disclosure uses optical fibers also as a sensor for determining any internal defects in the load-bearing core anywhere along the conductor. While laying the conductor, in fact, a stretch tension is generally applied which is proportional to the tensile strength of the conductor. A crack in the load-bearing element will result in a reduced load-bearing cross-section and, as a consequence, increased local strain. This local strain phenomenon will be identified by the BOTDR system **(200)** and its analysis software, which will then output an alarm signal and a distance value useful for identifying the exact position of the crack.

Also, the monitoring system thus designed compares, instant by instant, the length of the optical fibers with the nominal length of the pultruded core of the conductor. If the values are homogeneous, this will mean that no cracks have formed and impair the continuity of the optical fibers. If, while laying the conductor or installing it on a pylon, at least one of the optical fiber length values differs from the pultruded core length value, this will mean that at least one crack has formed in the conductor core, breaking at least one optical fiber. In this case as well, the distance value will be recorded by the monitoring system and will make it possible to know the exact position of the flaw.

The conductor of the present disclosure has at least two fibers, e.g., without however being limited thereto, preferably three fibers **(101),** arranged externally to the pultruded core **(102),** held in position by one or more spacer tapes **(103),** separated and protected from the conductor wires by one or more tapes made of polymeric material **(103)** and by an extruded or welded aluminium tube **(104),** which is also conductive and used for carrying electric current.

The present invention makes it possible to overcome the limitations that characterize the system described in WO 2019/168998 A1 and to present a solution capable of providing information about the structural integrity of the conductor continuously and over the entire length thereof during the production and installation phases.

Two optical fibers or, by way of non-limiting example, three optical fibers are laid on the load-bearing element made of composite material mutually offset by 120° and separated by a spacer made of, by way of non-limiting example, polymeric material. The fibers, positioned in the outer part of the pultruded element, are very sensitive to core deformations because they are distant from the neutral axis, and can detect any strain beyond the limit radius that may occur during the installation process and any local deformation caused by the presence of cracks in the pultruded element. The composite load-bearing element is made of, by way of non-limiting example, carbon fiber with an epoxy matrix, and can be purchased in commercial sizes and shapes. The application of the optical fibers on the surface of the pultruded element occurs after production, and this provides two advantages. A first advantage is given by the low cost of the starting materials, because both pultruded elements and optical fibers are already separately available on the market in formats and lengths compatible with those of overhead power conductors (generally up to 3-4 km). A second advantage is given by the fact that, if necessary, the optical fibers can be separated from the pultruded element when damages or manufacturing defects are detected. In such a circumstance, the pultruded element can then be reused, resulting in cost and time savings.

The assembly composed of the pultruded composite element and the optical fibers is kept integral by means of one or more tapes, also made of polymeric material, such as, without however being limited thereto, polyester or polyamides or polyimides or polyaramides or PEEK, the purpose of which is to hold the optical fibers in position, integral with the pultruded composite element, and to protect them during the next production stages. This construction offers numerous advantages. The optical fibers are not subjected to thermal stress, in that the whole process occurs without generation of heat; tensions are lower than the maximum allowable stresses that the fiber can undergo; and, should a fiber break, it can be fixed by simply stopping the production line and welding together the two ends by means of a jointer, without impairing the quality of the product. The semifinished product is then coated with continuously extruded aluminium, which is electrically conductive, the function of which is to prevent galvanic corrosion of the carbon core caused by contact with water and with the aluminium conductor wires.

While stranding the conductive aluminium claddings, which may be, by way of non limiting example, circular or otherwise shaped and made of pure, annealed or work-hardened aluminium or aluminium alloy (105), the optical fibers can be interrogated in order to verify the integrity of the semifinished product. This procedure allows checking the quality of the composite core to verify that it has not suffered any damage during the previous production steps.

Interrogation of the optical fibers occurs in a mode compatible with the installers' working conditions, since installers often have to work at the top of pylons under adverse weather conditions and bound by safety systems that make their movements difficult. Interrogation occurs from just one end of the conductor through the use of a commercial optical instrument called BOTDR (Brillouin Optical Time Domain Reflectometer), referred to in the present context as "BOTDR system **(200)",** which transfers the information to a processing unit **(300)** (e.g. a computer) via Wi-Fi signals (**FIG. 3**). The conductor end where the optical connections are made is cleared of the external aluminium claddings and the aluminium tube by using tools normally available to installers (pliers, hacksaw, pipe cutter, etc.). The ends of the optical fibers are taken for a length sufficient to create the optical connections and are connected to the BOTDR system. The end preparation task may even be carried out beforehand at the end of the production process, with the advantage of speeding up the installation operations, since it will only be necessary to connect the instrument. This optical instrument sends a series of optical pulses having suitable characteristics from one end of the fiber under examination, and from the same end it evaluates the time trend of the reflected component of the signal. The intensity of the reflected pulses is measured and integrated over time, processed in accordance with the Brillouin principle, and expressed in graphic form on the computer as a function of fiber length **(****FIG. 4****).**

A crack in the pultruded element will result in a local deformation of one or more fibers, which will be read and recorded by the monitoring system. The reading makes it possible to identify the position and the extension of the crack (**FIG. 2****).**

This method permits interrogating the integrity status of the conductor core also while installing the conductor, when one end of the conductor is coupled to the tension clamp and connected to the pylon. The free end can be interrogated by the monitoring system for analyzing the conductor core integrity and verifying that no structural damage has occurred during the first part of the installation process and that all the instructions in the manual have been complied with, including the observance of the minimum bending radius. The system may also be used for warning the installers in case of improper handling, before the structure integrity of the conductor core is impaired, thus avoiding accidents or damage to people or things on the working site.

The system can save all the recorded data for further analysis and verification of compliance with the practices described in the conductor installation manual, as a guarantee of the quality of the conductor and of the work carried out.

As previously mentioned, the monitoring system can also be applied to conductors with multiple load-bearing elements made of composite material stranded together.

As previously mentioned, the optical fibers belonging to the monitoring system may also be inserted into cavities formed on the surface of the pultruded element.

## Claims

1. Conductor (100) for bare overhead power lines with a monitoring system, comprising:
- a load-bearing core (102), made of composite material;
- one or more electrically conductive layers (104), externally associated with said load-bearing core (102);
**characterized in that** said monitoring system comprises:
- two or more optical fibers (101), arranged longitudinally along said load-bearing core (102), on a radially external surface of the same, wherein said two or more optical fibers (101) are arranged at approximately 90° or approximately 120°, so that, for any deformation of the core, at least one optic fiber is under compression and at least one optic fiber is under tension;
wherein said conductor (100) further comprises:
- a BOTDR system (200), associated with said optical fibers (101) and configured for reading a bending radius of said load-bearing core (102) and/or for determining the presence of cracks on said load-bearing core (102) and/or for determining the position of said cracks; and/or for determining a maximum allowable bending radius;
- a processing unit (300) configured for generating, as a function of said reading, a notification signal in the event that critical parameters are reached.

2. Conductor (100) with a monitoring system according to claim 1, wherein said load-bearing core (102) is made of pultruded material, said load-bearing core (102) being made either as a single element or as a plurality of elements stranded together.

3. Conductor (100) with a monitoring system according to claim 2, wherein:
if said load-bearing core (102) is made as a single element, then said optical fibers are arranged on the radially external surface of said single element;
if said load-bearing core (102) is made as a plurality of elements stranded together, then said optical fibers are arranged on the radially external surface of a central element of said elements stranded together.

4. Conductor (100) with a monitoring system according to any one of the preceding claims, wherein said BOTDR system (200) is configured for performing a check over the entire length of the load-bearing core (102) during the production of the conductor and also during the installation of the conductor.

5. Conductor with a monitoring system according to any one of the preceding claims, wherein said processing unit (300) is equipped with an artificial intelligence agent, configured for executing self-learning algorithms for discerning different types of defects of said load-bearing core (102).

6. Conductor with a monitoring system according to any one of the preceding claims, wherein said optical fibers (101) are of the G652 or G651 or G655 type and are preferably arranged along the entire length of said load-bearing core (102) offset by approximately 120°, said optical fibers (102) being in particular three in number.

7. Conductor with a monitoring system according to any one of the preceding claims, wherein said BOTDR system (200) is configured for sending one or more test signals in said optical fibers (101) and for receiving corresponding backscattered signals, wherein, by processing said backscattered signals, the effect of temperature is substantially cancelled and information is obtained which is directly correlated with the deformation of said optical fibers (101).

8. Conductor (100) with a monitoring system according to any one of the preceding claims, wherein said optical fibers (101) are held in position by spacers (103), preferably made of polymeric material, in particular polyaramide or polyamide material or Peek or polyesters or polyimides, said optical fibers (101) being preferably protected by one or more tapes or sheaths which, in particular, are made of polymeric material and/or aluminium or alloys thereof.

9. Conductor (100) with a monitoring system according to any one of the preceding claims, wherein communication between said BOTDR system (200) and the processing unit (300) occurs by wireless, preferably Wi-Fi, technology for continuous use during the conductor manufacturing, laying and installation phases, said processing unit (300) being preferably configured for saving the data in operation for further analysis, in particular for verifying the compliance with the correct practices described in the conductor installation manual.

10. Conductor (100) with a monitoring system according to any one of the preceding claims, wherein said BOTDR system (200) is configured for operating at one end only of said load-bearing core (102), leaving the opposite end clear for handling.

11. Conductor (100) with a monitoring system according to any one of the preceding claims, wherein any structural defects of said load-bearing core (102) and/or handling anomalies are detected by said BOTDR system (200) and recorded by said processing unit (300) even if said optical fibers (101) are not broken.

12. Conductor (100) with a monitoring system according to any one of the preceding claims, wherein said processing unit (300) is configured for generating an alarm signal when the conductor is handled incorrectly, before said load-bearing core (102) breaks.

## Patentansprüche

1. Leiter (100) für freiliegende elektrische Freileitungen mit einem Überwachungssystem, umfassend :
- einen tragenden Kern (102), der aus einem Verbundmaterial besteht ;
- eine oder mehrere elektrisch leitfähige Schichten (104), die außen mit dem tragenden Kern (102) verbunden sind ;
**dadurch gekennzeichnet, dass** das Überwachungssystem umfasst :
- zwei oder mehr optische Fasern (101), die in Längsrichtung entlang des tragenden Kerns (102) an einer radial äußeren Oberfläche desselben angeordnet sind, wobei diese zwei oder mehr optischen Fasern (101) in einem Winkel von etwa 90° oder etwa 120° angeordnet sind, so dass bei jeder Verformung des Kerns mindestens eine optische Faser unter Druck steht und mindestens eine optische Faser unter Spannung steht ;
wobei der Leiter (100) weiter Folgendes umfasst
- ein BOTDR-System (200), das mit den optischen Fasern (101) verbunden ist und konfiguriert ist, um einen Krümmungsradius des tragenden Kerns (102) zu lesen und/oder um das Vorhandensein von Rissen auf dem tragenden Kern (102) zu bestimmen und/oder um die Position der Risse zu bestimmen; und/oder um einen maximal zulässigen Krümmungsradius zu bestimmen ;
- eine Verarbeitungseinheit (300), die so konfiguriert ist, dass sie in Abhängigkeit von der genannten Ablesung ein Benachrichtigungssignal erzeugt, wenn kritische Parameter erreicht werden.

2. Leiter (100) mit Überwachungssystem nach Anspruch 1, wobei der tragende Kern (102) aus einem pultrudierten Material besteht, wobei der tragende Kern (102) entweder aus einem einzigen Element oder aus mehreren miteinander verseilten Elementen besteht.

3. Leiter (100) mit Überwachungssystem nach Anspruch 2, wobei:
wenn der tragende Kern (102) aus einem einzelnen Element besteht, dann sind die optischen Fasern auf der radial äußeren Oberfläche des einzelnen Elements angeordnet;
wenn der tragende Kern (102) aus einer Vielzahl von miteinander verseilten Elementen besteht, dann sind die optischen Fasern auf der radial äußeren Oberfläche eines mittleren Elements der miteinander verseilten Elemente angeordnet.

4. Leiter (100) mit Überwachungssystem nach einem der vorhergehenden Ansprüche, wobei das BOTDR-System (200) so konfiguriert ist, dass es während der Herstellung des Leiters und auch während der Installation des Leiters eine Überwachung über die gesamte Länge des tragenden Kerns (102) durchführt.

5. Leiter mit Überwachungssystem nach einem der vorhergehenden Ansprüche, wobei die Verarbeitungseinheit (300) mit einem Agenten für künstliche Intelligenz ausgestattet ist, der so konfiguriert ist, dass er selbstlernende Algorithmen ausführt, die verschiedene Arten von Defekten des tragenden Kerns (102) erkennen lassen.

6. Leiter mit Überwachungssystem nach einem der vorhergehenden Ansprüche, wobei die optischen Fasern (101) vom Typ G652 oder G651 oder G655 sind und vorzugsweise über die gesamte Länge des um etwa 120° versetzten tragenden Kerns (102) angeordnet sind, wobei die optischen Fasern (102) insbesondere drei an der Zahl sind.

7. Leiter mit Überwachungssystem nach einem der vorhergehenden Ansprüche, wobei das BOTDR-System (200) so konfiguriert ist, dass es ein oder mehrere Testsignale in die optischen Fasern (101) sendet und entsprechende Rückstreusignale empfängt, wobei durch die Verarbeitung der Rückstreusignale der Temperatureffekt im Wesentlichen aufgehoben wird und die erhaltene Information direkt mit der Verformung der optischen Fasern (101) korreliert.

8. Leiter (100) mit Überwachungssystem nach einem der vorhergehenden Ansprüche, wobei die optischen Fasern (101) durch Abstandshalter (103) in Position gehalten werden, vorzugsweise aus polymerem Material, insbesondere aus Polyaramid oder Polyamidmaterial oder aus Peek oder aus Polyestern oder aus Polyimiden, wobei die optischen Fasern (101) vorzugsweise durch ein oder mehrere Bänder oder Hüllen geschützt werden, die insbesondere aus polymerem Material und/oder aus Aluminium oder aus Legierungen davon bestehen.

9. Leiter (100) mit Überwachungssystem nach einem der vorhergehenden Ansprüche, wobei die Kommunikation zwischen dem BOTDR-System (200) und der Verarbeitungseinheit (300) über eine drahtlose Technologie, vorzugsweise Wi-Fi, für den kontinuierlichen Einsatz während der Herstellungs-, Verlege- und Installationsphasen des Leiters erfolgt, wobei die Verarbeitungseinheit (300) vorzugsweise so konfiguriert ist, dass sie während des Betriebs Daten für eine spätere Analyse aufzeichnet, insbesondere um die Einhaltung der im Installationshandbuch des Leiters beschriebenen bewährten Verfahren zu überprüfen.

10. Leiter (100) mit Überwachungssystem nach einem der vorhergehenden Ansprüche, wobei das BOTDR-System (200) so konfiguriert ist, dass es nur an einem Ende des tragenden Kerns (102) arbeitet und das gegenüberliegende Ende für die Handhabung frei lässt.

11. Leiter (100) mit Überwachungssystem nach einem der vorhergehenden Ansprüche, wobei jeder strukturelle Defekt des tragenden Kerns (102) und/oder jede Anomalie bei der Handhabung von dem BOTDR-System (200) erfasst und von der Verarbeitungseinheit (300) aufgezeichnet wird, auch wenn die die optischen Fasern (101) nicht gebrochen sind.

12. Leiter (100) mit Überwachungssystem nach einem der vorhergehenden Ansprüche, wobei die Verarbeitungseinheit (300) so konfiguriert ist, dass sie ein Alarmsignal erzeugt, wenn der Leiter unsachgemäß gehandhabt wird, bevor der tragende Kern (102) bricht.

## Revendications

1. Conducteur (100) pour lignes électriques aériennes nues avec un système de surveillance, comprenant :
- un noyau porteur (102), en matériau composite ;
- une ou plusieurs couches conductrices d'électricité (104), associées extérieurement au noyau porteur (102) ;
**caractérisé par le fait que** ledit système de surveillance comprend :
- deux ou plusieurs fibres optiques (101), disposées longitudinalement le long du noyau porteur (102), sur une surface radialement externe de celui-ci, dans lesquelles ces deux ou plusieurs fibres optiques (101) sont disposées à environ 90° ou environ 120°, de sorte que, pour toute déformation du noyau, au moins une fibre optique est en compression et au moins une fibre optique est en tension ;
dans lequel ledit conducteur (100) comprend en outre
- un système BOTDR (200), associé auxdites fibres optiques (101) et configuré pour lire un rayon de courbure dudit noyau porteur (102) et/ou pour déterminer la présence de fissures sur ledit noyau porteur (102) et/ou pour déterminer la position desdites fissures ; et/ou pour déterminer un rayon de courbure maximal admissible ;
- une unité de traitement (300) configurée pour générer, en fonction de ladite lecture, un signal de notification en cas d'atteinte de paramètres critiques.

2. Conducteur (100) avec système de surveillance selon la revendication 1, dans lequel ledit noyau porteur (102) est constitué d'un matériau pultrudé, ledit noyau porteur (102) étant constitué soit d'un seul élément, soit de plusieurs éléments toronnés ensemble.

3. Conducteur (100) avec système de surveillance selon la revendication 2, dans lequel :
si ledit noyau porteur (102) est constitué d'un seul élément, alors lesdites fibres optiques sont disposées sur la surface radialement externe dudit élément unique ;
si ledit noyau porteur (102) est constitué d'une pluralité d'éléments toronnés ensemble, alors lesdites fibres optiques sont disposées sur la surface radialement externe d'un élément central desdits éléments toronnés ensemble.

4. Conducteur (100) avec système de surveillance selon l'une quelconque des revendications précédentes, dans lequel ledit système BOTDR (200) est configuré pour effectuer un contrôle sur toute la longueur du noyau porteur (102) pendant la production du conducteur et également pendant l'installation du conducteur.

5. Conducteur avec système de surveillance selon l'une quelconque des revendications précédentes, dans lequel ladite unité de traitement (300) est équipée d'un agent d'intelligence artificielle, configuré pour exécuter des algorithmes d'auto-apprentissage permettant de discerner différents types de défauts de ledit noyau porteur (102).

6. Conducteur avec système de surveillance selon l'une quelconque des revendications précédentes, dans lequel lesdites fibres optiques (101) sont du type G652 ou G651 ou G655 et sont de préférence disposées sur toute la longueur de ledit noyau porteur (102) décalée d'environ 120°, lesdites fibres optiques (102) étant notamment au nombre de trois.

7. Conducteur avec système de surveillance selon l'une quelconque des revendications précédentes, dans lequel ledit système BOTDR (200) est configuré pour envoyer un ou plusieurs signaux de test dans lesdites fibres optiques (101) et pour recevoir des signaux rétrodiffusés correspondants, dans lequel, en traitant lesdits signaux rétrodiffusés, l'effet de la température est substantiellement annulé et l'information obtenue est directement corrélée à la déformation desdites fibres optiques (101).

8. Conducteur (100) avec système de surveillance selon l'une quelconque des revendications précédentes, dans lequel lesdites fibres optiques (101) sont maintenues en position par des écarteurs (103), de préférence en matériau polymère, notamment en polyaramide ou en matériau polyamide ou en Peek ou en polyesters ou en polyimides, lesdites fibres optiques (101) étant de préférence protégées par un ou plusieurs rubans ou gaines qui sont notamment en matériau polymère et/ou en aluminium ou en alliages de ceux-ci.

9. Conducteur (100) avec système de surveillance selon l'une quelconque des revendications précédentes, dans lequel la communication entre ledit système BOTDR (200) et l'unité de traitement (300) se fait par une technologie sans fil, de préférence Wi-Fi, pour une utilisation continue pendant les phases de fabrication, de pose et d'installation du conducteur, ladite unité de traitement (300) étant de préférence configurée pour enregistrer les données en cours d'opération pour une analyse ultérieure, en particulier pour vérifier le respect des bonnes pratiques décrites dans le manuel d'installation du conducteur.

10. Conducteur (100) avec système de surveillance selon l'une quelconque des revendications précédentes, dans lequel ledit système BOTDR (200) est configuré pour fonctionner à une seule extrémité de ledit noyau porteur (102), laissant l'extrémité opposée libre pour la manipulation.

11. Conducteur (100) avec système de surveillance selon l'une quelconque des revendications précédentes, dans lequel tout défaut structurel de ledit noyau porteur (102) et/ou toute anomalie de manipulation sont détectés par ledit système BOTDR (200) et enregistrés par ladite unité de traitement (300) même si lesdites fibres optiques (101) ne sont pas rompues.

12. Conducteur (100) avec système de surveillance selon l'une quelconque des revendications précédentes, dans lequel ladite unité de traitement (300) est configurée pour générer un signal d'alarme lorsque le conducteur est manipulé de manière incorrecte, avant que ledit noyau porteur (102) ne se rompe.
